# EUROPÄISCHE PATENTSCHRIFT

(11) **EP 2 853 765 B1**
(45) Veröffentlichungstag und Bekanntmachung des Hinweises auf die Patenterteilung: **18.04.2018**
(21) Anmeldenummer: 14184358.1
(22) Anmeldetag: 11.09.2014
(51) Int. Cl.: F16D 55/226, F16D 65/18

(54) **Scheibenbremse für ein Nutzfahrzeug**
Disc brake for a commercial vehicle
Frein à disque pour un véhicule utilitaire

(30) Priorität: 27.09.2013 DE 102013016140
(43) Veröffentlichungstag der Anmeldung: 01.04.2015
(73) Patentinhaber: KNORR-BREMSE Systeme für Nutzfahrzeuge GmbH, 80809 München (DE)
(72) Erfinder: Huber, Stefan, 94501 Aldersbach (DE)

(56) Entgegenhaltungen:
- EP-A1- 0 589 206
- WO-A1-96/34216
- DE-A1- 4 032 886

## Beschreibung

Die Erfindung betrifft eine Scheibenbremse für ein Nutzfahrzeug nach dem Oberbegriff des Anspruchs 1.

Eine gattungsgemäße Scheibenbremse ist aus der WO 96/34216 A1 bekannt.

Bei Betätigung einer solchen Scheibenbremse wird über einen im Aufnahmeraum des Bremssattels angeordneten Bremshebel, der endseitig als Exzenter ausgebildet ist und sich am Rücken des Bremssattels abstützt, eine Brücke in Richtung einer ortsfest am Fahrzeug gehaltenen Bremsscheibe verschoben.

In der Brücke sind vorzugsweise zwei parallel und abständig zueinander angeordnete Bremsstempel vorgesehen, die eine den Aufnahmeraum für die Brücke und den Bremshebel verschließende Verschlussplatte durchtreten, und mit denen ein Bremsbelag gegen die Bremsscheibe gepresst wird.

Um die Bremsstempel beim Lösen der Bremse aus ihrer Funktionsstellung zu bringen, so dass der Bremsbelag außer Eingriff ist, greift eine Rückstellfeder an der Brücke an, die sich andererseits an der Verschlussplatte abstützt.

Dabei ist diese Rückstellfeder als Schraubenfeder ausgebildet, die bei einem Zuspannen der Bremse gespannt wird. Um die Zuspannkräfte aufzufangen und ein Verbiegen der Verschlussplatte zu verhindern, muss diese in ihrer Dicke und in ihrer Gestaltung entsprechend dimensioniert sein.

Auch die Befestigung der Verschlussplatte am Bremssattel wird durch die Federkraft der Rückstellfeder beeinflusst, d.h., es sind entsprechende konstruktive Maßnahmen erforderlich, um einen sicheren Halt der Verschlussplatte zu gewährleisten.

Üblicherweise wird die Verschlussplatte mit dem Bremssattel verschraubt, wobei sowohl eine entsprechende Anzahl von Schrauben erforderlich ist wie auch deren Dimensionierung.

Naturgemäß ist dies mit entsprechenden Kosten verbunden, sowohl hinsichtlich der Materialbeschaffung und Formgebung der Verschlussplatte wie auch hinsichtlich deren Befestigung am Bremssattel.

Dies trifft gleichermaßen auf die Brücke zu, da die Schraubenfeder daran axial und radial geführt werden muss, letzteres zur Verhinderung von Auslenkungen. Dies erfordert eine bestimmte, materialintensive Gestaltung der Brücke.

Da es sich bei einer Scheibenbremse um ein Serienprodukt handelt, das in großen Stückzahlen zum Einsatz kommt, steht die bislang bekannte Konfiguration der Rückstellfeder einer stets geforderten und angestrebten Kostenoptimierung entgegen.

Der Erfindung liegt die Aufgabe zugrunde, eine Scheibenbremse der gattungsgemäßen Art so weiterzuentwickeln, dass sie einfacher und kostengünstiger herstellbar ist.

Diese Aufgabe wird durch eine Scheibenbremse mit den Merkmalen des Anspruchs 1 gelöst.

Durch diese konstruktive Ausgestaltung werden eine ganze Reihe von Vorteilen erzielt, insbesondere hinsichtlich einer Materialersparnis sowohl bei der Herstellung der Brücke wie auch der Verschlussplatte.

Die gemäß der Erfindung als Blattfeder ausgebildete Rückstellfeder ist bevorzugt bogenförmig ausgebildet und stützt sich mit ihrem Scheitel an der Brücke ab.

Die beidseitig sich davon erstreckenden Schenkel liegen bevorzugt an einer Anlage des Bremssattels an, so dass als Widerlager nicht mehr die Verschlussplatte, sondern der Bremssattel selbst dient.

Demnach hat die Verschlussplatte nunmehr lediglich Schutzfunktion, d.h. sie dient ausschließlich dem Verschluss des Aufnahmeraumes auf der der Bremsscheibe zugewandten Seite.

Aufgrund dessen kann die Verschlussplatte in ihrer Dicke wesentlich geringer dimensioniert sein, sowie ohne besondere Gestaltungen hinsichtlich einer Lastaufnahme. Durch die Materialeinsparung ebenso wie durch die vereinfachte Herstellung sind durchaus bemerkenswerte Kostenvorteile zu erzielen.

Diese ergeben sich auch dann, wenn, wie durch die Erfindung ermöglicht, die Verschlussplatte mit dem Bremssattel nicht mehr verschraubt, sondern beispielsweise verklebt wird.

Auch eine radiale und axiale Führung für die Rückstellfeder, wie sie zum Stand der Technik als Notwendigkeit beschrieben ist, ist nun nicht mehr erforderlich, so dass die Brücke belastungs- und gewichtsoptimiert hergestellt werden kann. D.h., gegenüber einer Brücke nach dem Stand der Technik kann diese nun schlanker und leichter ausgeführt werden. Durch die Materialeinsparung ergeben sich gleichfalls geringere Kosten.

Um eine seitliche Auslenkung der Blattfeder zu verhindern bzw. um eine lagegenaue Fixierung zu erhalten, kann die Anlage am Bremssattel für die Schenkel der Blattfeder entsprechend ausgebildet sein, beispielsweise in Form von Ausnehmungen, die in ihrer Breite der Breite der Blattfeder entsprechen.

Diese wiederum ist aus einem geeigneten Federblech hergestellt und auf sehr einfache Art und Weise zu fertigen, so dass deren Herstellung zumindest kostenneutral möglich ist.

Die genannte Gewichtsersparnis sowohl der Verschlussplatte wie auch der Brücke, aber auch der Blattfeder gegenüber einer Schraubenfeder, führt zu einer Gewichtsreduzierung der Scheibenbremse insgesamt, die im Automobilbau eine ständige Forderung ist.

Da in Nutzfahrzeugen eine Vielzahl von Scheibenbremsen montiert sind, ergibt sich aus der genannten Gewichtsreduzierung eine durchaus bemerkenswerte diesbezügliche Gesamtsituation, die in der Folge zu einer Verringerung des Kraftstoffverbrauchs führt mit der Reduzierung von Schadstoffemissionen ebenso wie zu einer Kosteneinsparung.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer schematischen Darstellung in einer Draufsicht
- Figur 2: einen Teilschnitt durch die Scheibenbremse gemäß der Linie II-II in Figur 1.

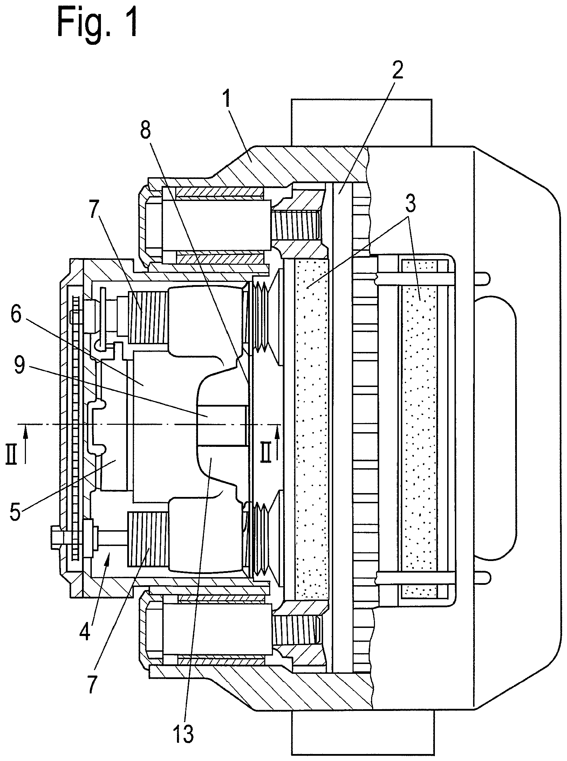

In der Figur 1 ist eine Scheibenbremse für ein Nutzfahrzeug dargestellt, mit einem eine Bremsscheibe 2 übergreifenden Bremssattel 1, beidseitig der Bremsscheibe 2 angeordneten und diese bei einer Bremsung kontaktierenden Bremsbelägen 3 sowie einer Zuspanneinrichtung 4, mit der der zuspannseitige Bremsbelag 3 gegen die Bremsscheibe 2 pressbar ist. Dabei wird der Anpressdruck von zwei Bremsstempeln 7 von der Zuspanneinrichtung 4 auf den Bremsbelag 3 übertragen.

Die Bremskraft wird von einem nicht dargestellten Bremszylinder aufgebracht, der auf einen Bremshebel 5 wirkt und mit dem eine Brücke 6, in der die Bremsstempel 7 gehalten sind, in Richtung der Bremsscheibe 2 verschiebbar ist.

Die Zuspanneinrichtung 4 ist in einem Aufnahmeraum des Bremssattels 1 positioniert, der auf der dem benachbarten Bremsbelag 3 zugewandten Seite durch eine Verschlussplatte 8 verschlossen ist, die von den Bremsstempeln 7 durchtreten wird.

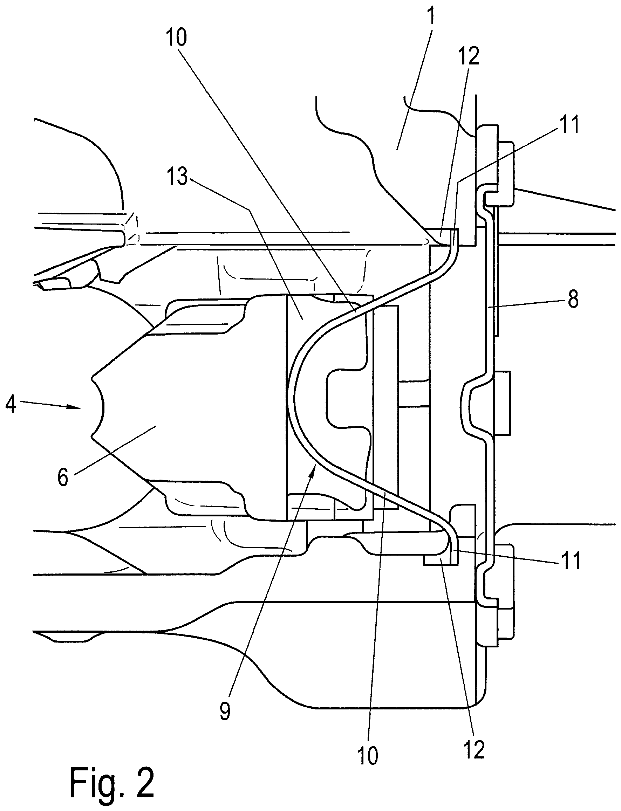

An der Brücke 6 stützt sich zur Rückstellung nach einem Lösen der Bremse eine Blattfeder 9 ab, die, wie besonders deutlich in der Figur 2 zu erkennen ist, bogenförmig ausgebildet ist und mit ihrem Scheitel an der Brücke 6 am Grund einer Aussparung 13 anliegt. Andererseits greift die Blattfeder 9 am Bremssattel 1 an, der damit ein Widerlager bildet.

Hierzu weist der Bremssattel 1 taschenförmige Ausnehmungen 12 auf, in denen jeweils eine angeformte Anlagelasche 11 der Blattfeder 9 eingreift, die sich abgewinkelt von einem Schenkel 10 der Blattfeder 9 erstreckt, wobei die beiden Anlagelaschen 11 gegensinnig gerichtet verlaufen.

Die Ausnehmungen 12 sind in den sich gegenüberliegenden Randbereichen einer Montageöffnung des Aufnahmeraumes vorgesehen, die durch die Verschlussplatte 8 verschlossen ist. Im Übrigen ist die Blattfeder 9, bezogen auf die Verschiebeachse der Brücke 6 spiegelsymmetrisch ausgebildet.

Bezogen auf die Achse der Bremsscheibe 2 erstreckt sich die Blattfeder 9 in ihrem Bogenverlauf radial.

Im vorliegenden Beispiel ist die Verschlussplatte 8 noch mit dem Bremssattel 1 verschraubt. Prinzipiell gestattet die Erfindung jedoch eine demgegenüber vereinfachte Verbindung der Verschlussplatte 8 mit dem Bremssattel 1, beispielsweise durch Verkleben. Da hierbei auf das Einbringen von Gewindebohrungen im Bremssattel 1 sowie auf den Einsatz einer Mehrzahl von Schrauben verzichtet werden kann, gestaltet sich die Montage der Verschlussplatte 8 und deren Herstellung deutlich günstiger.

Im Übrigen können die im Bremssattel 1 vorgesehenen Ausnehmungen 12 leicht bei der Herstellung des Bremssattels 1, der üblicherweise als Gussteil ausgebildet ist, eingebracht werden.

## Patentansprüche

1. Scheibenbremse für ein Nutzfahrzeug, mit einem eine Bremsscheibe (2) übergreifenden Bremssattel (1), der einen durch eine Verschlussplatte (8) verschlossenen Aufnahmeraum aufweist, in dem eine über einen Bremshebel (5) zur Bremsscheibe (2) hin bewegbare, zumindest einen Bremsstempel (7) aufweisende Brücke (6) positioniert ist, die nach einem Lösen der Bremse mittels einer anliegenden, entgegen der Zuspannrichtung wirkenden Rückstellfeder in eine Ausgangsstellung bringbar ist, **dadurch gekennzeichnet, dass** die Rückstellfeder als Blattfeder (9) ausgebildet ist.

2. Scheibenbremse nach Anspruch 1, **dadurch gekennzeichnet, dass** die Blattfeder (9) bogenförmig gestaltet ist

3. Scheibenbremse nach Anspruch 1 oder 2, **dadurch gekennzeichnet, dass** die Blattfeder (9) mit ihrem Scheitel an der Brücke (6) anliegt.

4. Scheibenbremse nach einem der vorhergehenden Ansprüche, **dadurch gekennzeichnet, dass** die Blattfeder (9) in Bezug auf die Verschiebeachse der Brücke (6) spiegelsymmetrisch ausgebildet ist.

5. Scheibenbremse nach einem der vorhergehenden Ansprüche, **dadurch gekennzeichnet, dass** beidseitige Schenkel (10) der Blattfeder (9) endseitig zu abgewinkelten Anlagelaschen (11) geformt sind.

6. Scheibenbremse nach Anspruch 5, **dadurch gekennzeichnet, dass** die Anlagelaschen (11) in Ausnehmungen (12) des Bremssattels (1) einliegen.

7. Scheibenbremse nach Anspruch 6, **dadurch gekennzeichnet, dass** die Ausnehmungen (12) in ihrer Breite etwa der Breite der Blattfeder (9) im Bereich der Anlagelaschen (11) entspricht.

8. Scheibenbremse nach Anspruch 6 oder 7, **dadurch gekennzeichnet, dass** die Ausnehmungen (12) in den sich gegenüberliegenden Randbereichen einer Montageöffnung des Aufnahmeraumes vorgesehen sind, die durch die Verschlussplatte (8) verschlossen ist.

9. Scheibenbremse nach einem der Ansprüche 2 bis 8, **dadurch gekennzeichnet, dass** die Blattfeder (9) sich in ihrem Bogenverlauf in radialer Richtung der Bremsscheibe (2) erstreckt.

10. Scheibenbremse nach einem der vorhergehenden Ansprüche, **dadurch gekennzeichnet, dass** die Brücke (6) eine Aussparung (13) aufweist, an deren Grund die Blattfeder (9) anliegt.

## Claims

1. A disc brake for a utility vehicle having a brake calliper (1) which extends around a brake disc (2) and a receiving space closed by a closure plate (8) in which is positioned a bridge (6) that can be moved towards the brake disc (2) by a brake lever (5), has at least one brake piston and, once the brake has been released, can be moved to a starting position by means of an adjacent return spring acting against the direction of application, **characterised in that** the return spring is designed as a leaf spring (9).

2. A disc brake according to claim 1, **characterised in that** the leaf spring (9) is of curved design.

3. A disc brake according to claim 1 or 2, **characterised in that** the apex of the leaf spring (9) abuts the bridge (6).

4. A disc brake according to one of the preceding claims, **characterised in that** the leaf spring (9) is mirror-symmetrical in relation to the axis of displacement of the bridge (6).

5. A disc brake according to one of the preceding claims, **characterised in that** the ends of the legs (10) on either side of the leaf spring (9) are formed to angled contact tabs (11).

6. A disc brake according to claim 5, **characterised in that** the contact tabs (11) lie in recesses (12) of the brake calliper (1).

7. A disc brake according to claim 6, **characterised in that** the width of the recesses (12) corresponds approximately to the width of the leaf spring (9) in the region of the contact tabs (11).

8. A disc brake according to claim 6 or 7, **characterised in that** the recesses (12) are provided in the opposing edge regions of a mounting opening of the receiving space, which is closed by the closure plate (4).

9. A disc brake according to one of claims 2 to 8, **characteris d in that** the curve of the leaf spring (9) extends radially in relation to the brake disc (2).

10. A disc brake according to one of the preceding claims, charact rised in that the bridge (6) has a recess (13) against the base of which the leaf spring (9) abuts.

## Revendications

1. Frein à disque, pour un véhicule utilitaire, comprenant un étrier (1) de frein chevauchant un disque (2) de frein et ayant un espace de réception, qui est fermé par une plaque (8) de fermeture et dans lequel est placé un pontet (6), qui peut être déplacé vers le disque (2) de frein par un levier (5) de frein, qui a au moins un piston (7) de frein et qui, après un desserrage du frein, peut être mis dans une position initiale, au moyen d'un ressort de rappel s'appliquant et agissant à l'encontre du sens de serrage, **caractérisé en ce que** le ressort de rappel est constitué sous la forme d'un ressort (9) à lame.

2. Frein à disque suivant la revendication 1, **caractérisé en ce que** le ressort (9) à lame est conformé en forme d'arc.

3. Frein à disque suivant la revendication 1 ou 2, **caractérisé en ce que** le ressort (9) à lame s'applique au pontet (6) par son sommet.

4. Frein à disque suivant l'une des revendications précédentes, **caractérisé en ce que** le ressort (9) à lame est symétrique comme en un miroir par rapport à l'axe de déplacement du pontet (6).

5. Frein à disque suivant l'une des revendications précédentes, **caractérisé**
**en ce que** des branches (10) des deux côtés du ressort (9) à lame sont formées du côté de l'extrémité en des pattes (11) d'application coudées.

6. Frein à disque suivant la revendication 5,
**caractérisé**
**en ce que** les pattes (11) d'application entrent dans des creux (12) de l'étrier (1) de frein.

7. Frein à disque suivant la revendication 6,
**caractérisé**
**en ce que** les creux (12) correspondent dans leur largeur à peu près à la largeur du ressort (9) à lame dans la région des pattes (11) d'application.

8. Frein à disque suivant la revendication 6 ou 7,
**caractérisé**
**en ce que** les creux (12) sont prévus dans les parties de bord opposées d'une ouverture de montage de l'espace de réception, qui est fermée par la plaque (8) de fermeture.

9. Frein à disque suivant l'une des revendications 2 à 8,
**caractérisé**
**en ce que** le ressort (9) à lame s'étend dans sa courbe arquée dans la direction radiale du disque (2) de frein.

10. Frein à disque suivant l'une des revendications précédentes, **caractérisé**
**en ce que** le pontet (6) a un évidement (13) au fond duquel le ressort (9) à lame s'applique.
